# FASCICULE DE BREVET EUROPEEN

(11) **EP 0 722 663 B1**
(45) Date de publication et mention de la délivrance du brevet: **06.10.1999**
(21) Numéro de dépôt: 96460003.5
(22) Date de dépôt: 22.01.1996
(51) Int. Cl.: A22C 7/00

(54) **Unité de moulage de produits alimentaires, notamment pour la cuisson de jambons**
Formeinheit für Nahrungsprodukten, insbesondere zum Kochen von Schinken
Molding unit for food products, especially for the cooking of hams

(30) Priorité: 23.01.1995 FR 9500921
(43) Date de publication de la demande: 24.07.1996
(73) Titulaire: KAUFLER S.A., F-22600 Loudeac (FR)
(72) Inventeur: Champalaune, Jean-Claude, F-35290 Saint-Meen-Le-Grand (FR); Corveller, Yvon, F-56300 Pontivy (FR)
(74) Mandataire: Le Faou, Daniel

(56) Documents cités:
- WO-A-86/02805
- FR-A- 2 485 884
- FR-A- 2 672 270
- FR-A- 2 688 385
- FR-A- 2 690 899
- US-A- 2 310 957

## Description

La présente invention concerne une unité de moulage de produits alimentaires, notamment pour la cuisson de jambons.

Plus précisément, l'invention se rapporte à une unité de moulage du type comprenant un ensemble de moules en forme de goulottes disposées horizontalement, côte-à-côte et parallèlement les unes aux autres, leur fond étant dirigé vers le bas et leur ouverture vers le haut, cet ensemble de moules étant fixé à des moyens de support qui autorisent l'empilage des unités les unes sur les autres.

Des unités de ce genre font par exemple l'objet des documents de brevet FR-A-2 601 653 et FR-A-2 672 270.

Les goulottes sont fixées, à chacune de leurs deux extrémités, à des plaques verticales.

Selon le FR-A-2 601 653, ces plaques constituent les deux côtés d'une structure en forme de cadre, équipée de quatre pieds adaptés pour permettre l'empilage des unités.

Selon le FR-A-2 672 270, les plaques verticales d'extrémité sont conformées, par pliage, d'une manière particulière qui leur confère une section autorisant l'empilage.

Après empilage, les goulottes de deux couches superposées se trouvent à une certaine distance les unes au-dessus des autres, de manière à permettre la circulation de l'air autour des différents moules à l'intérieur des cellules de cuisson, ou dans d'autres postes de traitement des produits.

Du fait que plusieurs moules sont regroupés sur un même ensemble, les opérations faites sur les produits se trouvent facilitées, et le rendement des opérations se trouve amélioré.

Ainsi, si on a affaire à la cuisson de jambons, il est possible de manipuler simultanément l'ensemble des moules formant une unité ; cette manipulation, qui se fait notamment pour leur empilage et leur désempilage, se prête bien à une automatisation, à l'aide de manipulateurs mécaniques ; pour cela, on utilise généralement une paire de bras qui viennent saisir l'unité par le dessous, en supportant les goulottes.

Une fois qu'une pile d'unités a été formée, il est possible de traiter simultanément les produits qui y sont contenus, par exemple de les cuire à l'intérieur d'une cellule de cuisson appropriée.

Une telle pile présente un encombrement relativement réduit, ce qui permet de travailler avec un rendement élevé.

Il a été proposé, par ailleurs, de doter chaque unité de ce type d'un ensemble d'éléments de couvercle. A chaque goulotte est ainsi associée un élément de couvercle qui s'étend en dessous de son fond, et est fixé à celui-ci.

Lorsque les unités sont empilées les unes sur les autres, chaque élément de couvercle vient s'engager dans l'ouverture de la goulotte appartenant à l'unité sous-jacente, à l'aplomb duquel elle se trouve. Un tel arrangement des moules est connu du document FR-A-2 485 884.

L'unité inférieure de la pile peut être dépourvue d'éléments de couvercle, ou bien reposer sur un support - par exemple sur un chariot de transfert - directement par ces couvercles ; l'unité supérieure reçoit des éléments de couvercle spéciaux, portés par une structure dépourvue de moules.

De telles unités de moulage, qu'elles soient ou non munies d'éléments de couvercle, sont commercialisées par la demanderesse sous la désignation commerciale "POLYMODULE" (marque déposée).

Lorsque les unités sont pourvues d'éléments de couvercle, les bras de manutention dont il a été fait état plus haut viennent également saisir les unités de moulage par le dessous, mais ils supportent alors non plus les fonds de goulottes, mais les éléments de couvercle fixés sous les fonds.

L'utilisation de couvercles est utile notamment pour la cuisson des jambons, car la viande se trouve alors confinée à l'intérieur d'un volume bien défini dans lequel il est maintenu sous une certaine pression qui va éliminer les manques de matière et déterminer sa forme définitive.

Il est souhaitable cependant que la pression exercée par les couvercles puisse être bien contrôlée, de manière individuelle.

On comprend qu'avec les dispositifs connus, qui ont été brièvement décrits ci-dessus, cette pression est très aléatoire car elle va dépendre du volume de chaque jambon (ou autre produit) se trouvant dans le moule. En effet, les couvercles d'une unité vont venir presser en premier sur le ou les produit(s) de plus grand volume de l'unité sous-jacente, qui vont donc se trouver soumis à un écrasement plus important que les autres ; au contraire, les produits de petit volume risquent de ne pas être comprimés, ou de l'être insuffisamment.

Comme en pratique, les volumes effectifs des produits insérés dans les moules, malgré le pesage préalable de ces produits, s'inscrivent inévitablement dans une certaine fourchette de tolérances, ils vont être soumis à des pressions pouvant être très variées.

On comprend par ailleurs que les produits contenus dans les unités placées en bas de la pile vont être soumis à des pressions plus importantes que ceux des unités supérieures, car ils ont à supporter tout le poids des unités qui les surplombent.

Enfin, l'appui d'une unité sur l'unité sous-jacente, qui devrait se faire uniquement par l'intermédiaire des supports de goulottes, ne se fait pas dans de bonnes conditions, les zones d'appui des couvercles - ou de certains couvercles - sur les produits sous-jacents contrariant le bon appui des supports l'un sur l'autre.

Il en résulte une instabilité de l'empilage, qui est néfaste aux différentes opérations, notamment de transfert des produits.

On connaît des moules traditionnels pour la cuisson de jambons, qui sont munis d'un couvercle sollicité par des ressorts aptes à comprimer le jambon qui y est contenu.

Ainsi, chaque jambon est soumis au cours de sa cuisson à une pression contrôlée.

Cette cuisson, et la compression du jambon, se font donc dans de bonnes conditions.

Toutefois, ce type de moule traditionnel est destiné à être placé sur des étagères à l'intérieur des cellules de cuisson ; un tel système n'est pas transposable à des moules empilables les uns sur les autres ni, a fortiori, pour des unités à plusieurs moules telles que celles qui sont concernées par la présente invention.

On connaît également, par le document US-A-2 310 957, un dispositif de moulage et de traitement de jambons comprenant un empilage de moules individuels entre lesquels sont intercalés des éléments formant couvercles. L'ensemble garni de jambons est empilé et soumis à une compression de direction verticale, au moyen de deux jeux de ressorts de traction latéraux.

Malheureusement, on retrouve dans ce dispositif connu l'inconvénient mentionné plus haut selon lequel la compression exercée sur les jambons augmente du haut vers le bas de la pile, le poids des moules garnis de jambons situés au-dessus d'un couvercle s'ajoutant à l'effort de compression développé par le jeu de ressorts.

En outre, un tel dispositif n'est pas non plus transposable à des unités comprenant plusieurs moules placés côte-à-côte.

L'invention vise à pallier les différents inconvénients de l'état de la technique.

Un premier objectif de l'invention est de proposer une unité de moulage du type indiqué plus haut, à moules multiples, grâce auquel après empilage de plusieurs unités, les supports de goulottes soient en parfait appui les uns sur les autres, tandis que chaque produit contenu dans un moule, par exemple un jambon, est individuellement soumis à une pression contrôlée, qui lui est appliquée par l'élément de couvercle que le surplombe.

Un autre objectif de l'invention est de proposer une unité qui se prête bien à une manipulation mécanisée, la manutention des unités de moulage pouvant se faire sans problème, avec une grande stabilité, par des organes de soutien et de transfert classiques, venant saisir les unités par le dessous, en prenant appui contre les couvercles.

L'unité de moulage qui fait l'objet de l'invention comprend, comme cela est connu en soi, un ensemble de moules en forme de goulottes disposées horizontalement, côte-à-côte et parallèlement les unes aux autres, leur fond étant dirigé vers le bas et leur ouverture vers le haut, tandis qu'à chaque goulotte est associé un élément de couvercle qui s'étend en dessous de son fond, cet ensemble de moules étant fixé à des moyens de support qui autorisent l'empilage des unités, les éléments de couvercle venant alors s'engager dans les ouvertures de goulottes des unités sous-jacentes.

Les objectifs mentionnés plus haut sont atteints grâce au fait que chacun de ces éléments de couvercle est mobile individuellement en direction verticale, sur une course limitée, par rapport à la goulotte à laquelle il est associé, un système élastique tel qu'un jeu de ressorts tendant constamment à l'écarter du fond de la goulotte pour le repousser vers le bas.

Par ailleurs, selon un certain nombre de caractéristiques avantageuses, non limitatives de l'invention :
- le système élastique comporte des moyens formant butée, aptes à limiter la course élastique de l'élément de couvercle dans le sens de son rapprochement du fond des goulottes ;
- le système élastique consiste en un jeu de quatre ressorts disposés dans les quatre zones d'angle de la goulotte ;
- le système élastique consiste en un jeu de ressorts de compression intercalés entre deux pièces d'appui solidaires, l'une de la goulotte, et l'autre de l'élément de couvercle ;
- une même pièce d'appui est commune à deux goulottes adjacentes ;
- chaque ressort de compression est hélicoïdal, d'axe vertical, et il entoure coaxialement un barreau rigide dont la longueur est supérieure à celle du ressort lorsque celui-ci est comprimé au maximum ;
- ce barreau est fixé à l'une des pièces d'appui et il porte une tige coaxiale traversant l'autre pièce d'appui et portant une tête servant de butée de fin de course, dans le sens de l'écartement de l'élément de couvercle par rapport à la goulotte ;
- les moyens de support des goulottes consistent en une paire de flasques fixés aux deux extrémités des goulottes, perpendiculairement à leur direction longitudinale, et qui forment les parois d'extrémité de ces goulottes ;
- ces flasques présentent, en regard des goulottes, des perçages permettant de perforer les produits qui y sont contenus.

D'autres caractéristiques et avantages de l'invention apparaîtront de la description et des dessins annexés qui en représentent, à simple titre d'exemple non limitatif, un mode de réalisation préféré.

Sur ces dessins :
- la figure 1 est une vue de côté schématique d'une unité de moulage, coupée par un plan vertical perpendiculaire à l'axe des goulottes ;
- la figure 2 est une vue de côté, coupée par le plan vertical II-II, de l'unité de moulage de la figure 1 ;
- la figure 3 est une vue schématique partielle, montrant deux moules voisins équipés de leur élément de couvercle, les éléments de couvercle étant écartés au maximum par rapport au fond des goulottes ;
- la figure 4 est un détail d'un mode de réalisation possible d'un système élastique, ce dernier étant coupé par un plan vertical passant par l'axe du ressort ;
- la figure 5 est une vue similaire à la figure 4, qui représente le système élastique en fin de course dans le sens du rapprochement du couvercle par rapport au fond ;
- la figure 6 est une vue similaire à la figure 3, qui illustre une opération de manutention de l'unité ;
- la figure 7 représente deux paires de moules superposés, garnis de jambons, avant une opération de cuisson ;
- la figure 8 est une vue analogue à la figure 7, représentant les moules et les jambons en fin de cuisson.

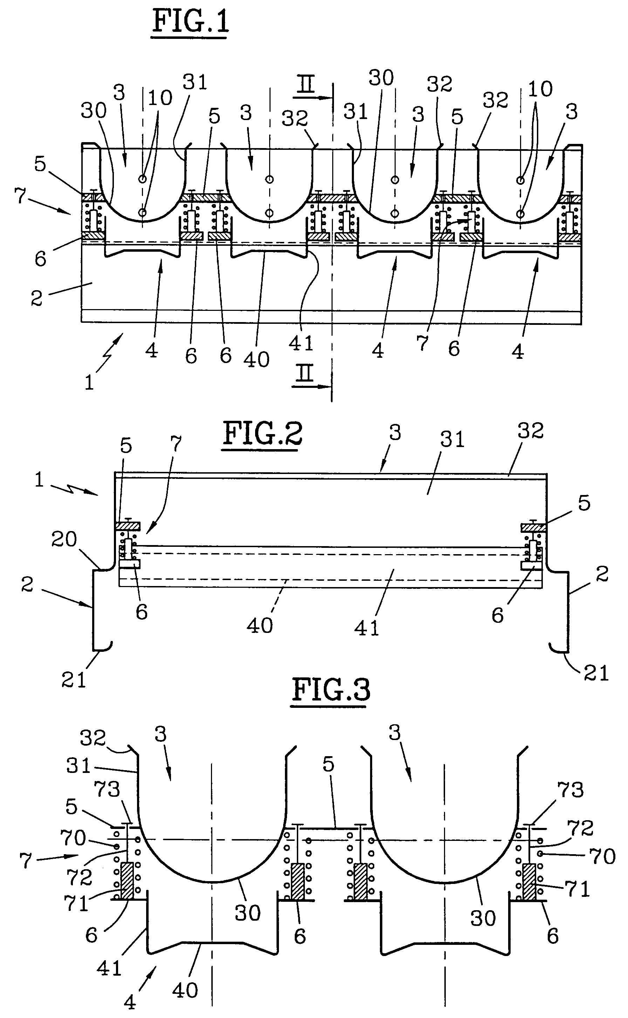

L'unité de moulage 1 représentée sur les figures 1 et 2 comprend quatre moules métalliques 3 en forme de goulottes. Celles-ci ont une section transversale ayant la forme d'un U, dont l'ouverture est dirigée vers le haut et le fond semi-cylindrique 30 vers le bas. Les flancs verticaux des goulottes sont référencés 31. Le bord supérieur des goulottes est replié vers l'extérieur, formant un rebord oblique 32.

A chacune de leurs extrémités, ces goulottes 3 sont fixées par soudage sur des flasques 2 ; il s'agit de plaques en tôle à pliage multiple, dont la partie inférieure s'étend vers le bas, bien en dessous des goulottes, et est décalée vers l'extérieur.

L'extrémité basse des flasques est repliée vers l'intérieur pour former des faces d'appui horizontales 21 destinées à venir en appui sur des faces intermédiaires horizontales 20, qui correspondent au décrochement vers l'extérieur de la zone médiane des flasques.

Ainsi, on peut empiler les unités de moulage les unes sur les autres, les faces d'appui 21 d'une unité venant se positionner et prendre appui sur les faces 20 de l'unité sous-jacente.

Un tel agencement est bien connu, notamment par le FR-A-2 672 270, auquel on pourra se reporter au besoin.

Les flasques supportent donc l'ensemble de goulottes, servent à l'empilage des différentes unités, et font aussi office de parois d'extrémité pour ces goulottes. Chacune des parois est percée d'un ou plusieurs orifices 10, qui permettent le passage d'une aiguille ou d'un autre outil susceptible de perforer le produit contenu dans la goulotte, comme cela sera expliqué plus loin.

De manière connue, à chaque goulotte 3 est associé un élément de couvercle 4 destiné à venir s'engager dans l'ouverture de la goulotte sous-jacente de la pile.

Sur les unités de moulage compris dans l'état de la technique, ces éléments de couvercle 4 sont directement fixés, généralement par soudage, aux goulottes et/ou aux flancs 2.

Au contraire, selon la présente invention, les éléments 4 sont montés de manière flottante, avec possibilité de déplacement vertical, sous les goulottes, comme cela va maintenant être expliqué.

Dans les quatre zones d'angle de chacune des goulottes est soudée une pièce d'appui 5, fixée à l'extérieur de la goulotte, à peu près dans la zone de raccordement du fond 30 avec la portion verticale 31. Les pièces d'appui 5 sont communes à deux goulottes voisines, lorsqu'elles sont situées dans l'espace séparant ces deux goulottes, comme cela ressort de l'observation de la figure 1.

On a désigné par la référence 40 la face active de l'élément de couvercle, tournée vers le bas. Elle est conformée pour être complémentaire de la forme souhaitée pour le dessus du jambon, ou autre produit à mouler. Ses flancs latéraux, verticaux, sont référencés 41. A chacun des quatre angles du couvercle, à l'extérieur des flancs 41, et à l'aplomb d'une pièce d'appui 5, est soudée une autre pièce d'appui 6.

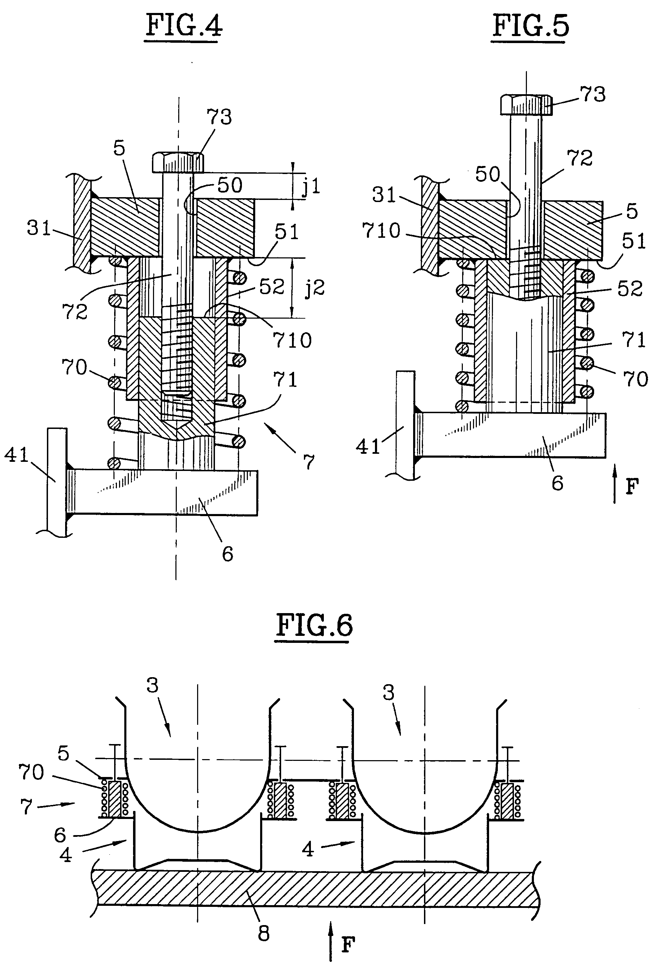

Des systèmes élastiques 7, intercalés entre les pièces d'appui 5 et 6, à chaque angle des goulottes, tendent à repousser les couvercles 4 vers le bas, comme cela va être expliqué en référence aux figures 4 et 5.

Dans le mode de réalisation représenté sur ces figures, le système élastique 7 comprend un ressort de compression hélicoïdal 70, d'axe vertical, dont l'extrémité basse repose contre la pièce 6, tandis que l'extrémité haute s'applique contre la face inférieure 51 de la pièce 5.

Sur le dessus de la pièce 6 est fixé, par des moyens appropriés quelconques, un barreau cylindrique 71, d'axe vertical, de diamètre inférieur au diamètre intérieur du ressort 70.

Selon une caractéristique importante, ce barreau à une longueur plus grande que la longueur minimale du ressort, c'est-à-dire sa longueur lorsque celui-ci est comprimé au maximum (ses spires devenant jointives).

Dans l'axe du barreau 71 est percé un trou taraudé qui reçoit une tige filetée 72 dirigée vers le haut, et traversant, avec un faible jeu, une ouverture cylindrique 50 percée dans la pièce 5.

Cette tige possède une tête 73, par exemple hexagonale, qui est située au dessus de la pièce 5.

En vissant plus ou moins la tige filetée 72 dans le barreau 71, on peut faire varier la distance séparant cette tête de la face d'extrémité 710 du barreau 71.

Sous la pièce 5, contre la face inférieure 51 de celle-ci, est soudé un manchon cylindrique 52, coaxial au barreau 71 et à la vis 72 ; le diamètre interne du manchon 52 est égal au jeu d'emboîtement prêt, au diamètre du barreau 71, et la longueur de ce manchon est telle que le barreau 71 s'engage partiellement, par sa portion supérieure, dans le manchon.

Le ressort 70 entoure à la fois le manchon 52 et le barreau 71.

Les parties télescopiques 71, 52, assurent un guidage en translation, suivant la direction verticale, de la pièce 6 par rapport à la pièce 5.

Le ressort de compression hélicoïdal 70 tend à écarter ces deux pièces, en repoussant la pièce 6 vers le bas.

La pièce 6 peut être rapprochée de la pièce 5, à l'encontre de la force du ressort 70, et écrasement axial de celui-ci.

L'illustration de la figure 4 correspond à un état intermédiaire du système élastique, le ressort 70 étant moyennement comprimé.

Ce ressort tend à repousser la pièce 6 vers le bas, ce déplacement étant possible sur une course limitée **j**_{**1**} correspondant à l'arrivée en butée de la tête 73 contre la pièce 5.

La remontée de la pièce 6 est possible, également sur une course limitée, référencée **j**_{**2**} ; cette course correspond à l'arrivée en butée de la face supérieure 710 du barreau contre la face inférieure 51 de la pièce 5.

La figure 5 correspond à cette situation, dans laquelle les pièces 6 et 5 sont rapprochées au maximum. Ce rapprochement est possible si on exerce sur la pièce 6 un effort **F** dirigé de bas en haut, d'intensité supérieure à la force développée par le ressort 70.

Il va de soi que la longueur du manchon 52 est choisie pour être plus faible que la longueur du barreau 71, afin de ne pas contrarier la mise en appui des faces 710 et 51.

Par ailleurs, le ressort possède encore une certaine réserve d' écrasement axial, ses spires n'étant pas jointives dans l'état illustré à la figure 5.

Sur les figures 1 à 3 et 6 à 8, les systèmes élastiques 7 ont été représentés de manière très schématique, le manchon de guidage 52 n'ayant pas été, en particulier, représenté.

Lorsque l'unité de moulage est à l'état de non utilisation, illustré à la figure 3 (sur laquelle ont été représentées seulement deux goulottes ainsi que leurs éléments de couvercle associés), les systèmes élastiques 7 sont détendus au maximum, et l'écartement des couvercles par rapport au fond des goulottes est maximal.

L'unité de moulage repose alors sur un support quelconque, par exemple sur le sol, par ses faces d'appui latérales 21 (non représentées sur la figure 3).

Chaque élément de couvercle 4 reste néanmoins solidaire de sa goulotte 3 dans chacun de ses angles, les têtes de vis 73 étant en butée contre les éléments d'appui 5.

Les caractéristiques des ressorts 70 et le réglage de la tige filetée 72, c'est-à-dire son degré de vissage dans le barreau 71, sont déterminés pour que dans cette course d'écartement maximale, les ressorts 70 ne soient pas complètement détendus, mais soient déjà légèrement précontraints en compression.

A la figure 6, on a illustré une opération de chargement de l'unité de moulage au moyen d'un manipulateur, comprenant par exemple une paire de bras de préhension disposés transversalement par rapport à la direction de goulottes. L'un de ces bras, visible à la figure 6, est référencé 8.

Les bras du manipulateur viennent saisir - comme cela se fait de manière usuelle - l'unité de moulage par le dessous. Pour cela, les bras sont introduits entre les flasques 2 par lesquels l'unité repose au sol, ou sur tout autre support.

Il convient de remarquer que la masse d'une unité de moulage de jambons est relativement élevée, à titre indicatif de l'ordre de 80 à 120 kilogrammes.

La force globale développée par l'ensemble des ressorts équipant l'unité a une valeur nettement inférieure au poids correspondant.

Par suite du mouvement de levage des bras 8, on observe donc une compression de l'ensemble des ressorts 70, et une mise en butée des barreaux 71 contre les pièces d'appui 5, ce qui correspond à l'état des figures 5 et 6.

On obtient alors un contact rigide - et non plus flottant - des couvercles par rapport à l'ensemble des goulottes, si bien que le transfert de l'unité de moulage, notamment pour son empilage ou pour le désempilage, peut se faire dans d'excellentes conditions de stabilité.

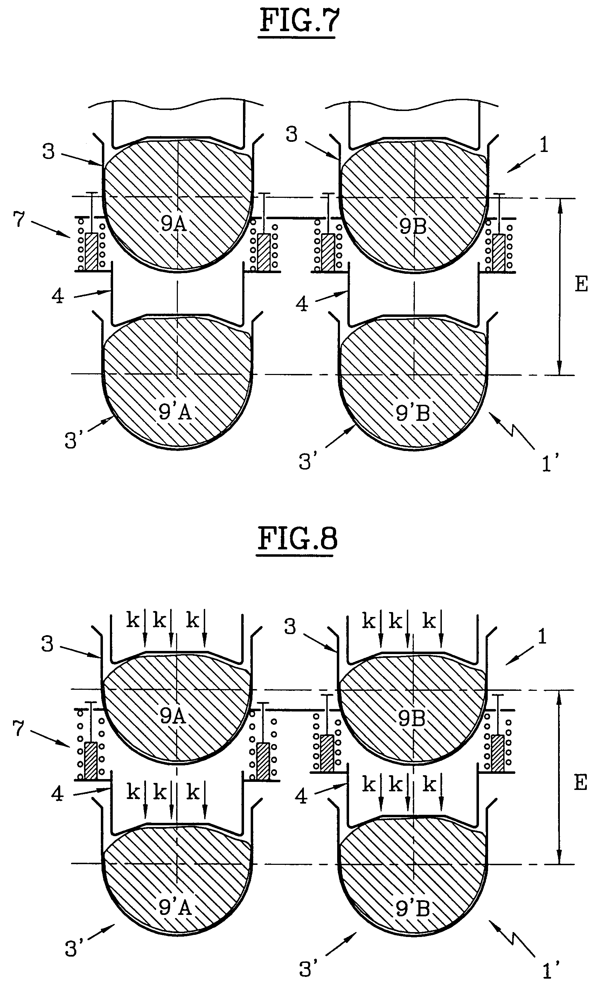

Les figures 7 et 8 illustrent une opération de moulage au cours de la cuisson sous vide de jambons.

Il s'agit d'un jambon sous forme de barre, destiné à être pré-tranché et préemballé en usine, pour être ensuite commercialisé en sachets contenant un certain nombre de tranches.

Dans certaines catégories de jambons, en particulier le jambon dit supérieur, il n'est pas possible d'éviter que les produits n'exsudent de manière importante durant la cuisson. Cette exsudation résulte du faible pouvoir de rétention d'eau de certains muscles constitutifs du jambon, ainsi que de l'interdiction faite par la réglementation de faire usage de certains additifs qui éviteraient les pertes d'eau au cours de la cuisson.

Le produit est cuit sous vide dans une enveloppe étanche en matière plastique.

L'exsudat apparaissant en cours de cuisson est une gelée qui est liquide à température assez forte (supérieure à 35° C environ), puis relativement solide après refroidissement.

Du fait que le produit est confiné dans une enveloppe étanche, cette gelée va rester autour du produit, quelque fois à l'intérieur de celui-ci, mais le plus souvent à sa périphérie.

Là ou se trouve la gelée, il y a par conséquent manque de viande, ce qui est commercialement difficilement acceptable, et perturbe l'opération de tranchage ; à cet égard, il faut remarquer que le tranchage se fait avec des épaisseurs constantes, ce qui est censé correspondre à des poids constants ; cette correspondance est mise en défaut s'il y a des "vides", c'est-à-dire des manques de matière dans certaines zones du produit.

Il serait donc souhaitable, après la cuisson sous vide, de percer les enveloppes étanches avant la solidification de la gelée pour permettre à celle-ci de s'échapper, et ensuite de comprimer le produit jusqu'à son refroidissement complet pour supprimer les manques de matière.

Les unités de moulage conformes à l'invention permettent de mettre en oeuvre cette technique comme cela va être expliqué en référence aux figures 7 et 8.

Les deux moules adjacents 3 représentés, appartenant à l'unité supérieure 1, contiennent de jambons 9A, 9B, tandis que les moules 3' de l'unité sous-jacente 1' contiennent des jambons 9'A et 9'B.

A la figure 7, ces jambons sont crus ; ils ont la forme de barres dont la longueur et la section correspondent sensiblement à celles des goulottes ; ils sont contenus dans une enveloppe étanche, consistant en un film en matière plastique.

Lors de l'empilage, chaque élément de couvercle 4 est venu s'engager dans l'ouverture de goulotte 3' sous-jacente, les bords chanfreinés 32 assurant son centrage à l'entrée de la goulotte. Sa face 40 vient s'appliquer conte le dessus du jambon contenu dans cette goulotte 3'.

L'ensemble des jambons ont sensiblement le même poids, et corrélativement le même volume, car ils ont été préalablement calibrés. Ce volume est choisi pour que les ressorts 70 soient fortement comprimés, sans toutefois que les couvercles ne soient relevés au maximum (figure 7).

Les ressorts ont donc une certaine réserve de pression.

Au cours de la cuisson, comme déjà dit plus haut, il se produit un exsudat en forme de gelée liquide.

On perfore alors les enveloppes en introduisant une aiguille à travers les orifices 10 prévus dans les parois d'extrémité des moules.

La gelée liquide peut donc s'échapper hors des enveloppes, puis des moules. De manière connue, des ouvertures appropriées sont ménagées dans les moules pour permettre l'évacuation des liquides.

Sous l'effet des ressorts 70, les éléments de couvercle 4 sont repoussés vers le bas individuellement et viennent chacun comprimer le jambon 9'A, 9'B qui se trouve dans la goulotte sous-jacente 3', en refoulant la gelée hors de celle-ci ; cette compression, qui est symbolisée par la flèche **k** à la figure 8, évite la formation de trous au sein de la masse de jambon, si bien qu'on obtient une barre de jambon cuite qui est compacte et parfaitement calibrée.

La course de descente de chaque élément de couvercle peut être différente d'un moule à l'autre, car elle dépend de la perte d'eau effective du jambon.

Naturellement, la course maximale possible des éléments de couvercle vers le bas est choisie suffisante pour permettre de compenser toutes les pertes d'eau.

Après refroidissement, on procède à l'enlèvement des jambons et au désempilage des unités de moulage.

## Revendications

1. Unité de moulage de produits alimentaires, notamment pour la cuisson de jambons, qui comprend un ensemble de moules en forme de goulottes (3) disposées horizontalement, côte-à-côte et parallèlement les unes aux autres, leur fond (30) étant dirigé vers le bas et leur ouverture vers le haut, à chaque goulotte (3) étant associé un élément de couvercle (4) qui s'étend en-dessous de son fond, cet ensemble de moules étant fixé à des moyens de support (2) qui autorisent l'empilage des unités (1), les éléments de couvercle (4) venant alors s'engager dans les ouvertures de goulotte des unités (1') sous-jacentes, caractérisée par le fait que chacun desdits éléments de couvercle (4) est mobile individuellement en direction verticale, sur une course limitée, par rapport à la goulotte (3) à laquelle il est associé, un système élastique (7), tel qu'un jeu de ressorts (70), tendant constamment à l'écarter du fond de la goulotte (30) pour le repousser vers le bas.

2. Unité de moulage selon la revendication 1, caractérisée par le fait que le système élastique (7) comporte des moyens (710 - 51) formant butée, aptes à limiter la course élastique de l'élément de couvercle (4) dans le sens de son rapprochement du fond de goulotte (30).

3. Unité de moulage selon la revendication 1 ou 2, caractérisée par le fait que le système élastique (7) consiste en un jeu de quatre ressorts (70) disposés dans les quatre zones d'angle de la goulotte (3).

4. Unité de moulage selon l'une des revendications 1 à 3, caractérisée par le fait que le système élastique (7) consiste en un jeu de ressorts de compression (70) intercalés entre deux pièces d'appui (5, 6) solidaires, l'une (5) de la goulotte, et l'autre (6) de l'élément de couvercle (4).

5. Unité de moulage selon la revendication 4, caractérisée par le fait qu'une même pièce d'appui (5) est commune à deux goulottes adjacentes (3).

6. Unité de moulage selon l'une des revendications 4 ou 5, caractérisée par le fait que chaque ressort de compression (70) est hélicoïdal, d'axe vertical, et qu'il entoure coaxialement un barreau rigide (71) dont la longueur est supérieure à celle du ressort (70) lorsque celui-ci est comprimé au maximum.

7. Unité de moulage selon la revendication 6, caractérisée par le fait que ledit barreau (71) est fixé à l'une (6) desdites pièces d'appui, et porte une tige coaxiale (72) traversant l'autre pièce d'appui (5) et portant une tête (73) servant de butée de fin de course, dans le sens de l' écartement de l'élément de couvercle (4) par rapport à la goulotte (3).

8. Unité de moulage selon l'une des revendications 1 à 7, caractérisée par le fait que les moyens de support des goulottes consistent en une paire de flasques (2) fixés aux deux extrémités des goulottes (3), perpendiculairement à leur direction longitudinale, et qui forment les parois d'extrémité de ces goulottes.

9. Unité de moulage selon la revendication 8, caractérisée par le fait que lesdits flasques (2) présentent, en regard des goulottes (3), des perçages (10) permettant de perforer les produits qui y sont contenus.

## Claims

1. A mold unit for molding foodstuffs, in particular for cooking ham, the mold unit comprising a set of spout-shaped molds (3) that are disposed horizontally, side-by-side, and parallel to one another, their bottoms (30) being directed downwards and their openings being directed upwards, each mold (3) being associated with a cover element (4) which lies beneath its bottom, said set of molds being fixed to support means (2) which allow the units (1) to be stacked, the cover elements (4) then becoming engaged in the mold openings of the underlying units (1'), the mold unit being characterized by the fact that each of said cover elements (4) can be individually moved vertically over a limited stroke relative to the mold (3) with which it is associated, a resilient system (7), such as a set of springs (70), constantly urging the cover away from the mold bottom (30), thereby pushing said cover downwards.

2. A mold unit according to claim 1, characterized by the fact that the resilient system (7) includes abutment-forming means (710-51) that are capable of limiting the resilient stroke of the cover element (4) when said cover moves towards the mold bottom (30).

3. A mold unit according to claim 1 or 2, characterized by the fact that the resilient system (7) consists of a set of four springs (70) disposed in the four corner regions of the mold (3).

4. A mold unit according to any one of claims 1 to 3, characterized by the fact that the resilient system (7) consists of a set of compression springs (70) interposed between two bearing parts (5, 6), one of the bearing parts (5) being secured to the mold, and the other bearing part (6) being secured to the cover element (4).

5. A mold unit according to claim 4, characterized by the fact that the same bearing part (5) is common to two adjacent molds (3).

6. A mold unit according to claim 4 or 5, characterized by the fact that each compression spring (70) is helical, having a vertical axis, and coaxially surrounds a rigid bar (71) having a length that is greater than the length of the spring (70) when said spring is maximally compressed.

7. A mold unit according to claim 6, characterized by the fact that said bar (71) is fixed to one (6) of said bearing parts, and carries a coaxial rod (72) passing through the other bearing part (5) and carrying a head (73) serving as an end-of-stroke abutment when the cover element (4) moves away from the mold (3).

8. A mold unit according to any one of claims 1 to 7, characterized by the fact that the support means of the molds consist in a pair of flanges (2) each of which is fixed to a respective one of the two ends of the molds (3), perpendicularly to their longitudinal direction, and which form the end walls of said molds.

9. A mold unit according to claim 8, characterized by the fact that said flanges (2) present holes (10) facing the molds (3), said holes enabling the products contained in said molds to be perforated.

## Patentansprüche

1. Formeinheit für Nahrungsprodukte, insbesondere für das Kochen von Schinken, welche einen Satz Formen in Form von Wannen (3) aufweist, welche horizontal, Seite an Seite und parallel zueinander angeordnet sind, wobei ihr Boden (3) nach unten und ihre Öffnung nach oben gerichtet ist, und jede der Wannen mit einem Deckelelement (4) verbunden ist, welches unter ihrem Boden verläuft, und jede dieser Formeinheiten an Mitteln für ihre Halterung (2) befestigt ist, die ein Stapeln der Formeinheiten (1) erlauben, wobei die Deckelelemente (4) dann in die Öffnungen der Wannen der darunterliegenden Formeinheiten (1') eingreifen,
**dadurch gekennzeichnet, daß**
jedes dieser Deckelemente (4) einzeln in senkrechter Richtung über einen begrenzten Hub gegenüber der Wanne (3) mit der er verbunden ist, bewegt werden kann, und daß ein elastisches System (7), wie zum Beispiel ein Satz Federn (70) ständig bereit ist, den Deckel vom Boden der Wanne (3) abzuspreizen, um ihn wieder nach unten zu drücken.

2. Formeinheit nach Anspruch 1,
**dadurch gekennzeichnet, daß**
das elastische System (7) Mittel (710, 51) aufweist, die ein Widerlager bilden, welche den elastischen Hub des Deckelementes (4) in Richtung seiner Annäherung an den Boden der Wanne (3) begrenzen können.

3. Formeinheit nach einem der Ansprüche 1 oder 2,
**dadurch gekennzeichnet, daß**
das elastische System (7) aus einem Satz von vier Druckfedern (70) besteht, welche in den vier Winkelbereichen der Wanne (3) angeordnet sind.

4. Formeinheit nach einem der Ansprüche 1 bis 3,
**dadurch gekennzeichnet, daß**
das elastische System (7) aus einem Satz von vier Druckfedern (70) besteht, die zwischen zwei Auflageteilen (5, 6) angeordnet sind, von denen das eine (5) an der Wanne und das andere (6) an dem Deckelelement (4) befestigt ist.

5. Formeinheit nach Anspruch 4,
**dadurch gekennzeichnet, daß**
zwei benachbarte Wannen (3) ein gemeinsames Auflageteil (5) besitzen.

6. Formeinheit nach einem der Ansprüche 4 oder 5,
**dadurch gekennzeichnet, daß**
jede der Druckfedern (70) schraubenförmig mit einer senkrechten Achse gestaltet ist, und daß sie axial einen steifen Stab (71) umschließt, dessen Länge größer ist, als die Länge der Feder (70), wenn diese maximal komprimiert ist.

7. Formeinheit nach Anspruch 6,
**dadurch gekennzeichnet, daß**
der Stab (71) an einem (6) der Auflageteile befestigt ist und eine koaxiale Spindel (72) trägt, welche das andere Auflageteil (5) durchquert und einen Kopf (73) trägt, der als Widerlager in Richtung der Abspreizung des Deckelementes (4) gegenüber der Wanne (3) dient.

8. Formeinheit nach einem der Ansprüche 1 bis 7,
**dadurch gekennzeichnet, daß**
die Mittel für die Halterung der Wannen aus einem Paar Flanschen (2) bestehen, welche an den beiden Enden der Wannen (3) im rechten Winkel zu deren Längsrichtung befestigt sind und die Endwände dieser Wannen bilden.

9. Formeinheit nach Anspruch 8,
**dadurch gekennzeichnet, daß**
diese Flansche (2) in Richtung den Wannen (3) Bohrungen (10) aufweisen, welche es erlauben, die darin eingelegten Produkte zu perforieren.
